# FASCICULE DE BREVET EUROPEEN

(11) **EP 3 339 143 B1**
(45) Date de publication et mention de la délivrance du brevet: **17.07.2019**
(21) Numéro de dépôt: 17202498.6
(22) Date de dépôt: 20.11.2017
(51) Int. Cl.: B62D 25/20, B62D 21/15

(54) **ENSEMBLE POUR STRUCTURE DE CAISSE DE VÉHICULE AUTOMOBILE COMPRENANT UN ABSORBEUR DE CHOCS**
ANORDNUNG FÜR KAROSSERIESTRUKTUR EINES KRAFTFAHRZEUGS, DIE EINEN STOSSDÄMPFER UMFASST
ASSEMBLY FOR MOTOR VEHICLE BODY STRUCTURE COMPRISING A SHOCK ABSORBER

(30) Priorité: 20.12.2016 FR 1662942
(43) Date de publication de la demande: 27.06.2018
(73) Titulaire: RENAULT s.a.s., 92100 Boulogne-Billancourt (FR)
(72) Inventeur: CARRIE, Julien, 78000 VERSAILLES (FR); VIVERO, François, 78860 SAINT NOM LA BRETECHE (FR)

(56) Documents cités:
- EP-A1- 0 855 333
- FR-A1- 3 029 883
- JP-A- 2000 062 644
- US-A1- 2008 238 148

## Description

### DOMAINE TECHNIQUE

La présente invention concerne un ensemble pour une structure de caisse de véhicule automobile comprenant un absorbeur de chocs.

### ETAT DE L'ART

Une structure de caisse de véhicule automobile comprend par exemple d'avant en arrière suivant une direction d'extension longitudinale, un compartiment moteur prévu pour loger un groupe motopropulseur et un habitacle prévu pour accueillir des occupants du véhicule automobile.

La structure de caisse comprend un plancher agencé dans l'habitacle et dans lequel est installé un tunnel central s'étendant suivant la direction d'extension longitudinale. Le plancher est prolongé vers l'avant du véhicule automobile par un tablier transversal s'étendant entre un bord transversal inférieur, agencé en regard du plancher, et un bord transversal supérieur. Le tablier sépare ainsi le compartiment moteur de l'habitacle.

Le véhicule automobile comprend en outre des longerons longitudinaux installés de part et d'autre du plancher et qui se prolongent vers l'avant du véhicule automobile, dans le compartiment moteur, jusqu'à une barre transversale reliant les longerons longitudinaux l'un à l'autre et qui est prévue pour recevoir un pare-chocs du véhicule automobile.

La partie avant des longerons longitudinaux est par exemple conçue pour se déformer par absorption d'énergie, lorsqu'un choc est appliqué à l'avant du véhicule automobile, c'est-à-dire avec le pare-chocs du véhicule automobile.

De cette manière, dans le cas d'un choc à l'avant du véhicule automobile, la partie avant des longerons longitudinaux se déforme, dans un premier temps, pour absorber l'énergie produite par le choc, puis si toute l'énergie n'a pas pu être absorbée par la partie avant des longerons longitudinaux, la compression du compartiment moteur conduit, dans un second temps, le groupe motopropulseur à venir s'appuyer contre le tablier qui transmet alors l'énergie restante à l'habitacle.

La décélération ressentie par les occupants peut alors être particulièrement brutale, ce qui est à la fois désagréable et dangereux pour eux.

Il peut aussi arriver que le groupe motopropulseur traverse le tablier et s'introduise dans l'habitacle. Cette situation est particulièrement dangereuse pour les occupants du véhicule automobile.

Plusieurs solutions ont été proposées pour éviter que de telles situations ne se produisent.

Le document EP-A-1 125 829 propose par exemple d'installer un élément de transmission d'effort dans le véhicule automobile, l'élément de transmission d'effort étant supporté par le tablier d'une part et par le tunnel central d'autre part. L'élément de transmission d'effort permet ainsi de dévier l'effort résultant du choc depuis le tablier vers le plancher.

Un autre exemple est proposé dans le document US-A-2008/0238148. Dans ce document, le tunnel central est relié au tablier par l'intermédiaire d'un soufflet prévu pour se déformer par absorption d'énergie, lorsque le groupe motopropulseur vient s'appuyer contre le tablier.

Ces solutions ne sont toutefois pas satisfaisantes car elles ne permettent pas de diminuer la décélération qui est ressentie par les occupants du véhicule automobile pendant le choc, mais seulement de limiter l'intrusion du groupe motopropulseur une fois que le groupe motopropulseur est en appui contre le tablier.

### PRESENTATION DE L'INVENTION

La présente invention a pour but de pallier les inconvénients précédemment cités, notamment en proposant un ensemble pour une structure de caisse de véhicule automobile permettant de réduire la décélération ressentie par des occupants du véhicule automobile, lors d'un choc à l'avant dudit véhicule automobile.

Plus précisément, l'invention a pour objet un ensemble pour structure de caisse de véhicule automobile s'étendant de l'arrière vers l'avant suivant une direction longitudinale, l'ensemble comprenant :
- un tablier transversal s'étendant entre un bord transversal inférieur et un bord transversal supérieur pour séparer un compartiment moteur destiné à accueillir un groupe motopropulseur d'un habitacle situé en arrière par rapport au compartiment moteur,
- un tunnel s'étendant suivant la direction longitudinale et comprenant un premier tronçon situé dans l'habitacle du véhicule automobile, le premier tronçon du tunnel se prolongeant au-delà du tablier, dans le compartiment moteur, par un deuxième tronçon sur lequel est installé un absorbeur de chocs conçu pour se déformer par absorption d'énergie.

Selon différents modes de réalisation de l'invention, qui pourront être pris ensemble ou séparément :
- le tablier et le deuxième tronçon du tunnel définissent ensemble un espace libre dans lequel est logé l'absorbeur de chocs ;
- l'absorbeur de chocs est configuré pour se déformer par absorption d'énergie, lorsqu'un effort de compression suivant la direction longitudinale est appliqué audit absorbeur de chocs ;
- l'ensemble comprend en outre une traverse de tablier située dans le compartiment moteur et reliée au tablier, la traverse de tablier s'étendant globalement transversalement par rapport à la direction longitudinale et comprenant une âme agencée sensiblement perpendiculairement à la direction longitudinale et à distance du tablier,
- le tunnel se prolonge au-delà du tablier, dans le compartiment moteur, jusqu'à l'âme de la traverse de tablier ;
- le tunnel se prolonge dans le compartiment moteur au-delà de l'âme de la traverse de tablier ;
- l'absorbeur de chocs comprend une âme plane, agencée globalement perpendiculairement à la direction longitudinale, à une extrémité avant du tunnel ;
- l'âme de l'absorbeur de chocs est en appui contre l'âme de la traverse de tablier ;
- l'âme de l'absorbeur de chocs comprend des bords, dits verticaux, s'étendant sensiblement parallèlement à une direction verticale, perpendiculaire à la direction longitudinale ;
- l'âme comprend des ailes s'étendant suivant la direction longitudinale depuis les bords verticaux et venant prendre appui contre le tablier ;
- les ailes sont pourvues d'une pluralité de plis repartis le long de leur aile respective suivant la direction longitudinale, chacun des plis s'étendant globalement parallèlement à la direction verticale.

L'invention a aussi pour objet une structure de caisse de véhicule automobile comprenant un ensemble tel que précédemment décrit.

L'invention a encore pour objet un véhicule automobile comprenant une structure de caisse telle que précédemment décrite.

### PRESENTATION DES DESSINS

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés dans lesquels :
- la figure 1 est une vue partielle, en perspective, d'une structure de caisse de véhicule automobile comprenant un ensemble selon un mode de réalisation de l'invention ;
- la figure 2 est une vue schématique, de dessus de l'avant de la structure de caisse illustrée à la figure 1 ;
- la figure 3 est une vue en perspective de l'ensemble pour véhicule automobile illustré à la figure 1 ;
- la figure 4 est une vue de détail de l'ensemble illustré à la figure 3 dans laquelle un absorbeur de chocs de l'ensemble n'est pas représenté ;
- la figure 5 correspond à la vue de l'ensemble illustrée à la figure 4 dans laquelle l'absorbeur de chocs selon l'invention est représenté ;
- la figure 6 est une vue en perspective de l'absorbeur de chocs illustré aux figures 1 à 3 et 4 suivant une première orientation ;
- la figure 7 est une vue en perspective de l'absorbeur de chocs illustré à la figure 6 suivant une deuxième orientation.

### DESCRIPTION DETAILLEE

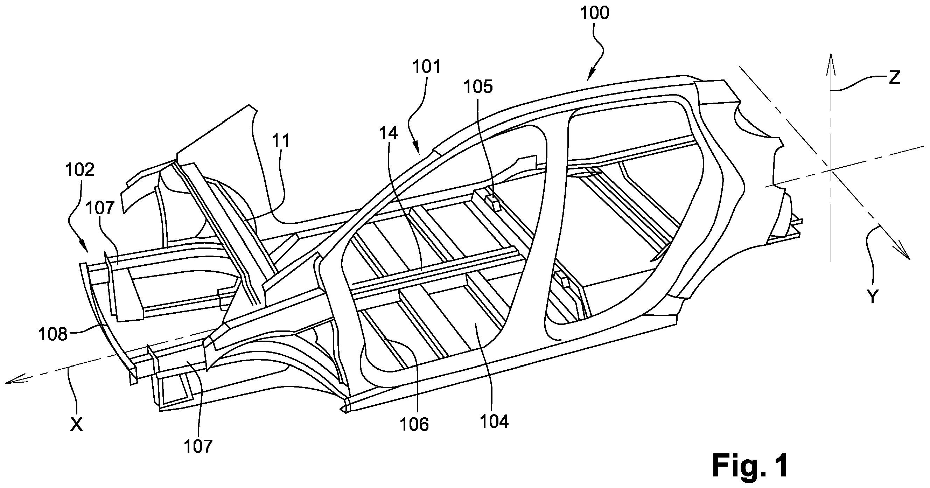

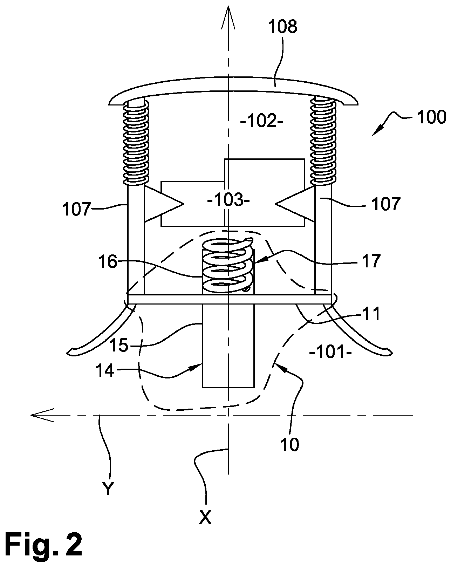

Les figures 1 et 2 montrent une structure de caisse 100 de véhicule automobile comprenant un ensemble 10 selon un mode de réalisation de l'invention.

On définit un repère orthogonal comprenant une direction longitudinale X vers l'avant, une direction transversale horizontale Y et une direction verticale Z vers le haut.

La structure de caisse 100 s'étend d'arrière en avant suivant la direction longitudinale X. Elle comprend un habitacle 101 destiné à accueillir des occupants du véhicule automobile et un compartiment moteur 102 situé à l'avant véhicule automobile par rapport à l'habitable 101. Le compartiment moteur 102 loge et abrite un groupe motopropulseur 103 (figure 2) conçu pour produire un couple qui est ensuite transmis à des roues motrices (non représentées) du véhicule automobile.

La structure de caisse 100 comprend un plancher 104 globalement horizontal qui délimite l'habitacle 101 vers le bas. Le plancher 104 s'étend entre un bord transversal arrière 105 et un bord transversal avant 106. On entend par « bord transversal », un bord s'étendant sensiblement parallèlement à la direction transversale Y.

Le plancher 104 comprend en outre des bords longitudinaux chacun reliés à un longeron longitudinal 107 du véhicule automobile. On entend par « bord longitudinal », un bord s'étendant sensiblement parallèlement à la direction longitudinale X.

Les longerons longitudinaux 107 se prolongent par exemple dans le compartiment moteur 102 jusqu'à un support 108 de pare-chocs qui les relient entre eux et qui est destiné à recevoir un pare-chocs du véhicule automobile.

La partie des longerons longitudinaux 107 située dans le compartiment moteur 102 est configurée pour se déformer par absorption d'énergie, notamment lorsqu'un effort de compression suivant la direction longitudinale X est appliqué à l'avant du véhicule automobile. On entend par « effort appliqué à l'avant du véhicule automobile », un effort appliqué au niveau du pare-chocs du véhicule automobile.

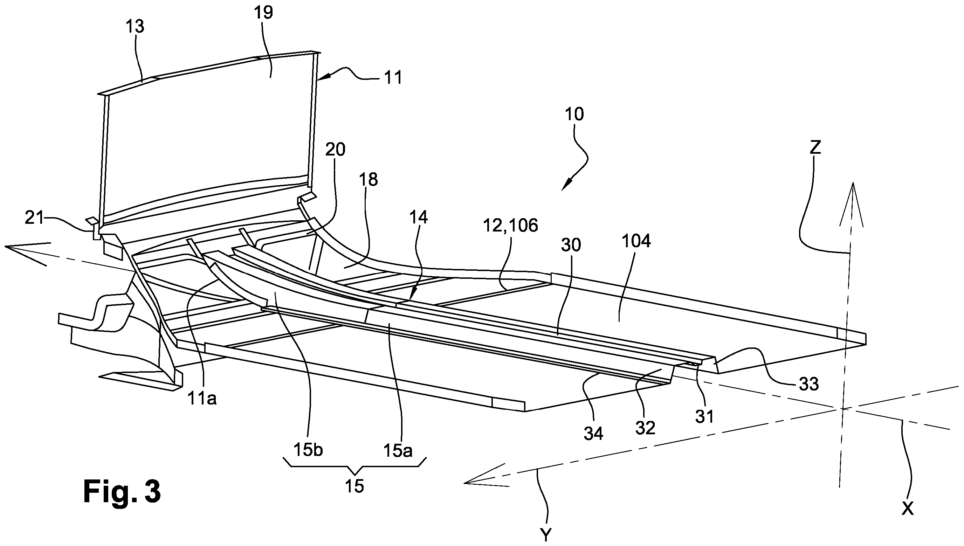

Les figures 3 à 5 montrent un exemple d'ensemble 10 pour la structure de caisse 100.

L'ensemble 10 comprend une cloison 11, aussi appelée tablier, s'étendant entre un bord transversal inférieur 12 et un bord transversal supérieur 13 (figure 3).

Le bord transversal inférieur 12 est destiné à être fixé à un bord transversal avant 106 du plancher 104 globalement horizontal du véhicule automobile situé dans l'habitacle 101, notamment par soudage.

Le bord transversal supérieur 13 est destiné à être fixé à une sous baie de pare-brise (non représentée) du véhicule automobile. Le tablier 11 sépare le compartiment moteur 102 et l'habitacle 101 du véhicule automobile.

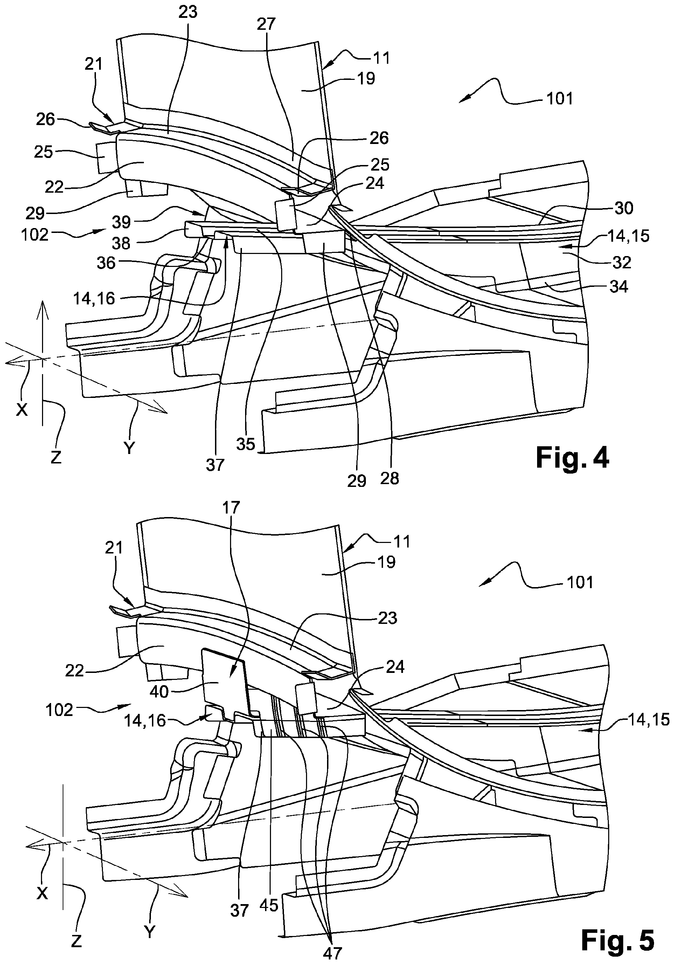

L'ensemble 10 comprend en outre un tunnel 14 s'étendant suivant la direction longitudinale X. Le tunnel 14 comprend un premier tronçon 15 situé dans l'habitacle 101 du véhicule automobile (figure 3). Il se prolonge au-delà du tablier 11, dans le compartiment moteur 102, par un deuxième tronçon 16 sur lequel est installé un absorbeur de chocs 17 configuré pour se déformer par absorption d'énergie (figure 5). L'absorbeur de chocs 17 est de préférence installé à une extrémité avant du tunnel 14.

De cette manière, l'absorbeur de chocs 17 est placé à l'avant du tablier 11. Ainsi, lorsqu'un choc est appliqué à l'avant du véhicule automobile, le groupe motopropulseur 103 s'appuie d'abord contre l'absorbeur de chocs 17, qui se déforme alors pour absorber l'énergie produite par le choc, avant de venir s'appuyer contre le tablier 11 (figure 2).

Par ailleurs, le groupe motopropulseur 103 ne vient s'appuyer contre le tablier 11, que si l'absorbeur de chocs 17 n'a pas pu suffisamment absorber l'énergie produite par le choc.

L'absorbeur de chocs 17 permet donc d'influencer la transmission du choc de l'avant vers l'arrière du véhicule automobile, en absorbant au moins en partie l'énergie produite par le choc, avant que le groupe motopropulseur 103 ne s'appuie contre le tablier 11 (figure 2). Cela a pour effet de diminuer la décélération ressentie par les occupants du véhicule automobile, lors d'un choc à l'avant du véhicule automobile.

Plus précisément, en cas de choc à l'avant du véhicule automobile, l'énergie produite par le choc est, dans un premier temps, transmise par le pare-chocs aux longerons longitudinaux 107 qui se déforment en absorbant au moins en partie l'énergie produite par le choc, réduisant ainsi la distance entre l'avant du véhicule automobile et le groupe motopropulseur 103 (figure 2).

Si le choc est violent, le groupe motopropulseur 103 est entraîné par l'avant du véhicule automobile vers le tablier 11. Il vient alors en appui contre l'absorbeur de chocs 17 qui peut lui-même se déformer en absorbant au moins en partie l'énergie restante produite par le choc.

Ce n'est que si toute l'énergie produite par le choc n'a pas pu être absorbée par les longerons longitudinaux 107 et par l'absorbeur de chocs 17 que le groupe motopropulseur 103 vient en appui contre le tablier 11. En outre, même si le groupe motopropulseur 103 parvient à venir en appui contre le tablier 11, l'énergie transmise par le groupe motopropulseur 103 à l'arrière du véhicule automobile, via le tablier 11, est fortement réduite, de sorte que la décélération ressentie par les occupants pendant le choc sera elle-même fortement diminuée.

Le tablier 11 comprend par exemple une encoche 11a de forme complémentaire avec une section du tunnel 14, prise transversalement par rapport à la direction longitudinal X, de sorte que le tunnel 14 s'étend de part et d'autre du tablier 11 (figure 3). Ainsi, le tunnel 14 traverse longitudinalement le tablier 11.

Le tablier 11 peut par exemple comprendre un tablier inférieur 18 et un tablier supérieur 19.

Le tablier inférieur 18 s'étend entre le bord transversal inférieur 12 et un bord transversal intermédiaire 20 agencé entre les bords transversaux inférieur 12 et supérieur 13 suivant la direction verticale Z.

Le tablier inférieur 18 est par exemple incurvé entre le bord transversal inférieur 12 et le bord transversal intermédiaire 20. L'encoche 11a par l'intermédiaire de laquelle le tunnel 14 traverse le tablier 11 est par exemple formée dans le tablier inférieur 18.

Le tablier supérieur 19 s'étend entre le bord transversal intermédiaire 20 et le bord transversal supérieur 13. Le tablier supérieur 19 présente par exemple une forme globalement plane agencée perpendiculairement à la direction longitudinale X. Le tablier inférieur 18 assure la liaison entre le plancher 104 horizontal du véhicule automobile et le tablier supérieur 19 globalement vertical.

Le tablier inférieur 18 et le tablier supérieur 19 peuvent être d'un seul tenant. En variante, le tablier inférieur 18 et le tablier supérieur 19 peuvent être réalisés en deux pièces distinctes rapportées et fixées l'une à l'autre. Les tabliers inférieur 18 et supérieur 19 sont par exemple soudés ensemble.

L'ensemble 10 peut en outre comprendre une traverse de tablier 21 s'étendant globalement transversalement par rapport à la direction longitudinale X (figures 4 et 5). La traverse de tablier 21 est située dans le compartiment moteur 102 du véhicule automobile. La traverse de tablier 21 est reliée au tablier 11, notamment au tablier supérieur 19.

La traverse de tablier 21 présente par exemple une section en U.

La traverse de tablier 21 comprend une âme 22 agencée sensiblement perpendiculairement à la direction longitudinale X, à distance du tablier 11. L'âme 22 comprend des bords transversaux supérieur et inférieur, à partir desquels s'étendent respectivement des ailes supérieure et inférieure 23, 24, parallèlement à la direction longitudinale X.

Les ailes supérieure et inférieure 23, 24 de la traverse de tablier 21 s'étendent en direction du tablier 11. L'âme 22 comprend en outre des bords verticaux à partir desquels s'étendent des premières ailettes 25, par exemple prévues pour s'appuyer contre les longerons longitudinaux 107 du véhicule automobile. On entend par « bord vertical », un bord qui s'étend sensiblement parallèlement à la direction verticale Z. Les premières ailettes 25 sont par exemple destinées à être soudées aux longerons longitudinaux 107 du véhicule automobile.

L'aile supérieure 23 comprend un bord transversal avant, commun avec l'âme 22, un bord transversal arrière et deux bords longitudinaux. Le bord transversal avant de l'aile supérieure 23 se prolonge au-delà de chacun des bords verticaux de l'âme 22 pour accueillir des deuxièmes ailettes 26, par exemple prévues pour s'appuyer contre les longerons longitudinaux 107 du véhicule automobile. Les deuxièmes ailettes 26 sont par exemple destinées à être soudées aux longerons longitudinaux 107 du véhicule automobile.

L'aile supérieure 23 comprend en outre une troisième ailette 27 s'étendant globalement perpendiculairement vers le haut depuis son bord transversal arrière. La troisième ailette 27 s'appuie contre le tablier 11, notamment contre le tablier supérieur 19. La troisième ailette 27 est par exemple soudée au tablier 11.

L'aile inférieure 24 comprend un bord transversal avant, commun avec l'âme 22, un bord transversal arrière à partir duquel s'étend une quatrième ailette 28 et deux bords longitudinaux à partir desquels s'étendent des cinquièmes ailettes 29. La quatrième ailette 28 s'appuie contre le tablier 11, notamment contre le tablier supérieur 19 et est par exemple soudée au tablier 11.

Les cinquièmes ailettes 29 sont par exemple prévues pour s'appuyer contre les ailes latérales 37, 38 du deuxième tronçon 16 du tunnel 14 et sont par exemple destinées à être soudées auxdites ailes latérales 37, 38.

Le tunnel 14 se prolonge par exemple au-delà du tablier 11, dans le compartiment moteur 102, jusqu'à l'âme 22 de la traverse de tablier 21 (figures 4 et 5).

En variante, le tunnel 14 peut se prolonger au-delà de la traverse de tablier 21, notamment au-delà de l'âme 22 de la traverse de tablier 21, dans le compartiment moteur 102. De cette manière, l'absorbeur de chocs 17 est agencé au plus proche du groupe motopropulseur 103. Ainsi, lors d'un choc à l'avant du véhicule automobile, le groupe motopropulseur 103 vient plus rapidement au contact de l'absorbeur de chocs 17, qui peut amortir davantage le choc et éviter ainsi que le choc ne soit transmis vers l'arrière du véhicule automobile. Cela est par exemple applicable lorsque l'encombrement du groupe motopropulseur 103 est faible.

Le premier tronçon 15 du tunnel 14 s'étend par exemple en partie au niveau du plancher 104 du véhicule automobile 10 et en partie au niveau du tablier 11, notamment au niveau du tablier inférieur 18 (figure 3).

Le premier tronçon 15 du tunnel 14 peut être réalisé en deux parties distinctes 15a, 15b (figure 3). Le premier tronçon 15 du tunnel 14 comprend par exemple une première partie 15a agencée en regard du plancher 104 et une deuxième partie 15b agencée en regard du tablier 11, la première et la deuxième parties 15a, 15b étant rapportées et fixées l'une à l'autre respectivement au niveau de leurs extrémités avant et arrière, de sorte à assurer la continuité du tunnel 14.

La première partie 15a est rapportée et fixée au plancher 104 tandis que la deuxième partie 15b est rapportée et fixée au tablier 11.

En variante, le premier tronçon 15 du tunnel 14 est d'un seul tenant et est rapporté et fixé d'un bloc sur le plancher 104 et le tablier 11.

Le premier tronçon 15 du tunnel 14 est par exemple soudé au plancher 104 et/ou au tablier 11.

Le premier tronçon 15 du tunnel 14 comprend une âme 30 globalement horizontale (figure 3). Une surface supérieure de l'âme 30 présente par exemple une rainure 31 s'étendant suivant la direction longitudinale X.

L'âme 30 comprend en outre deux bords longitudinaux à partir desquels des ailes latérales 32, 33 s'étendent parallèlement à la direction verticale Z. Les ailes latérales 32, 33 comprennent chacune un bord longitudinal supérieur, commun avec l'âme 30, et un bord longitudinal inférieur à partir duquel peut s'étendre une ailette 34 prévue pour s'appuyer contre le plancher 104 et/ou contre le tablier 11, notamment le tablier inférieur 18, du véhicule automobile. Les ailettes 34 sont par exemple prévues pour être soudées sur le plancher 104 et/ou le tablier 11.

Le deuxième tronçon 16 du tunnel 14 comprend une âme 35 globalement horizontale s'étendant dans le prolongement de l'âme 30 du premier tronçon 15 (figure 4).

L'âme 35 du deuxième tronçon 16 du tunnel 14 présente par exemple une rainure 36 s'étendant globalement suivant la direction longitudinale X, dans le prolongement de la rainure 31 du premier tronçon 15 du tunnel 14.

Le deuxième tronçon 16 du tunnel 14 peut en outre comprendre des ailes latérales 37, 38 agencées perpendiculairement à la direction transversale Y et s'étendant dans le prolongement des ailes latérales 32, 33 du premier tronçon 15 du tunnel 14.

L'âme 30 du premier tronçon 15 s'étendant au niveau du tablier 11, notamment du tablier inférieur 18, et l'âme 35 du deuxième tronçon 16 du tunnel 14 sont par exemple légèrement inclinées par rapport à un plan horizontal, une extrémité supérieure du tunnel 14 correspondant à une extrémité avant dudit tunnel 14. Cela permet de diriger le tunnel 14 en direction de la traverse de tablier 21. On entend par « légèrement inclinées », un angle entre les âmes 30, 35 du tunnel 14 et le plan horizontal compris entre 0 et 30°.

Le tablier 11 et le deuxième tronçon 16 du tunnel 14, notamment l'âme 35 du deuxième tronçon 16 du tunnel 14, définissent ensemble un espace 39 libre dans lequel l'absorbeur de chocs 17 est logé (figure 4).

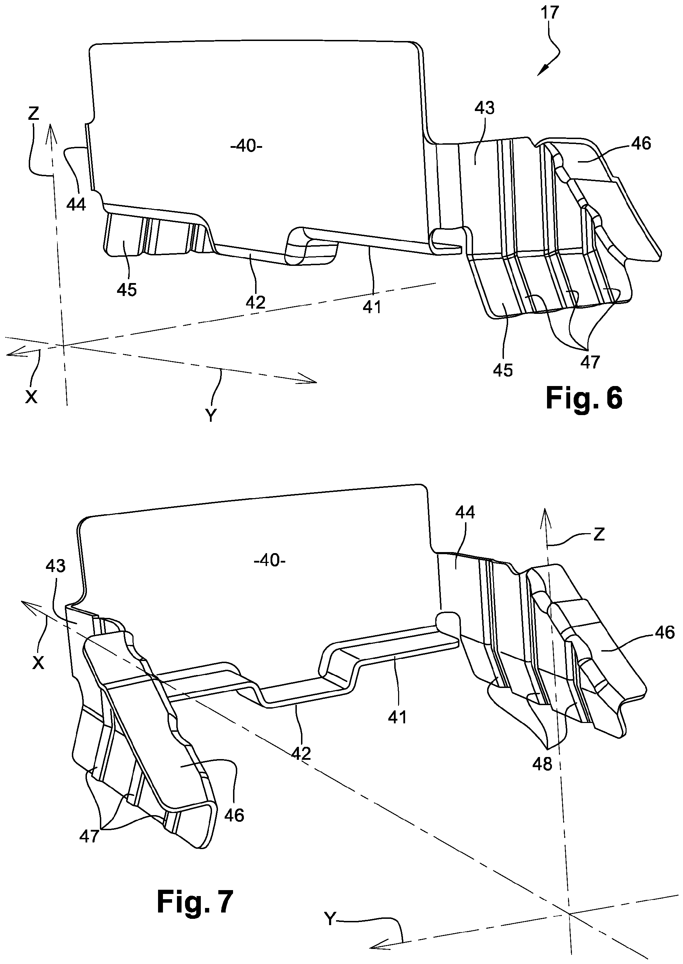

L'absorbeur de chocs 17 est montré plus en détail sur les figures 6 et 7.

L'absorbeur de chocs 17 comprend une âme 40 plane agencée globalement perpendiculairement à la direction longitudinale X.

L'âme 40 est agencée à l'extrémité avant du tunnel 14, de sorte à être en regard du groupe motopropulseur 103 et à venir en contact avec ledit groupe motopropulseur 103 en cas de choc à l'avant du véhicule automobile.

Ainsi, plus le tunnel 14 se prolonge, dans le compartiment moteur 102, et plus l'extrémité avant du tunnel 14 s'éloigne à distance du tablier 11, plus l'âme 40 est elle-même décalée vers l'avant du compartiment moteur 102. Cela permet notamment d'assurer le contact entre le groupe motopropulseur 103 et l'absorbeur de choc 17, via l'âme 40, au plus tôt, lors d'un choc à l'avant du véhicule automobile. Cela est par exemple applicable lorsque l'encombrement du groupe motopropulseur 103 est faible.

L'âme 40 comprend un bord transversal supérieur, un bord transversal inférieur et deux bords verticaux.

L'âme 40 de l'absorbeur de chocs 17 est par exemple installée en appui contre l'âme 22 de la traverse de tablier 21. L'âme 40 de l'absorbeur de chocs 17 est par exemple soudée à l'âme 22 de la traverse de tablier 21.

L'absorbeur de chocs 17 comprend en outre une paroi inférieure 41 s'étendant globalement suivant la direction longitudinale X depuis le bord transversal inférieur de l'âme 40. La paroi inférieure 41 s'étend en direction du tablier 11.

La paroi inférieure 41 est en appui contre l'âme 35 du deuxième tronçon 16 du tunnel 14. Plus précisément, la surface inférieure de la paroi inférieure 41 est en appui contre la surface supérieure de l'âme 35 du deuxième tronçon 16 du tunnel 14.

La paroi inférieure 41 est par exemple de forme complémentaire avec l'âme 35 du deuxième tronçon 16 du tunnel 14. Pour cela, la surface inférieure de la paroi inférieure 41 comprend par exemple une nervure 42 coopérant avec la rainure 36 de l'âme 35 du deuxième tronçon 16 du tunnel 14 par complémentarité de forme.

L'absorbeur de chocs 17 comprend aussi des ailes 43, 44 sensiblement verticales s'étendant parallèlement à la direction longitudinale X depuis les bords verticaux de l'âme 40 et venant prendre appui contre le tablier 11.

Les ailes 43, 44 comprennent un bord longitudinal supérieur, un bord longitudinal inférieur, un bord avant, commun avec l'âme 40, et un bord arrière.

Chacune des ailes 43, 44 comprend une ailette 45 s'étendant depuis leur bord longitudinal inférieur et s'appuyant contre la paroi latérale 37, 38 correspondante du deuxième tronçon 16 du tunnel 14. Les ailettes 45 sont par exemple soudées sur les ailes 37, 38 du deuxième tronçon 16 du tunnel 14.

Le bord arrière des ailes 43, 44 est par exemple incliné par rapport à la direction verticale Z, de sorte à épouser la surface du tablier 11 agencée en regard du compartiment moteur 102.

Chacune des ailes 43, 44 comprend en outre une ailette 46 s'étendant depuis leur bord arrière et s'appuyant contre le tablier 11. Les ailettes 46 sont par exemple soudées sur le tablier 11.

L'absorbeur de chocs 17 est configuré pour se déformer par absorption d'énergie, lorsqu'un effort de compression suivant la direction longitudinale X est appliqué audit absorbeur de chocs 17.

Les ailes 43, 44 sont par exemple pourvues d'une pluralité de plis 47, 48 repartis le long de leur paroi latérale 43, 44 respectives suivant la direction longitudinale X. Chacun des plis 47 est agencé suivant un plan sensiblement perpendiculaire à la direction longitudinale X.

Les plis 47 peuvent en outre se prolonger sur les ailettes 45 en appui contre les ailes 37, 38 du deuxième tronçon 16 du tunnel 14.

Les plis 47 permettent ainsi à l'absorbeur de chocs 17 de favoriser sa déformation en compression suivant la direction longitudinale X.

L'ensemble 10 décrit ci-dessus est particulièrement avantageux car il propose de loger un absorbeur de chocs 17, dans le compartiment moteur 102, à l'avant du tablier 11, de sorte à absorber au maximum l'énergie produite par un choc à l'avant du véhicule automobile, avant que celle-ci ne soit transmise à l'habitacle 101 du véhicule automobile et donc à ses occupants. La sécurité des occupants du véhicule automobile est donc améliorée.

## Revendications

1. Ensemble (10) pour une structure de caisse (100) de véhicule automobile s'étendant de l'arrière vers l'avant suivant une direction longitudinale (X), l'ensemble (10) comprenant :
- un tablier transversal (11) s'étendant entre un bord transversal inférieur (12) et un bord transversal supérieur (13) pour séparer un compartiment moteur (102) destiné à accueillir un groupe motopropulseur (103) d'un habitacle (101) situé en arrière par rapport au compartiment moteur (102),
- un tunnel (14) s'étendant suivant la direction longitudinale (X) et comprenant un premier tronçon (15) situé dans l'habitacle (101),
l'ensemble (10) étant **caractérisé en ce que** le premier tronçon (15) du tunnel (14) se prolonge au-delà du tablier (11), dans le compartiment moteur (102), par un deuxième tronçon (16) sur lequel est installé un absorbeur de chocs (17) conçu pour se déformer par absorption d'énergie.

2. Ensemble (10) selon la revendication 1, dans lequel le tablier (11) et le deuxième tronçon (16) du tunnel (14) définissent ensemble un espace (39) libre dans lequel est logé l'absorbeur de chocs (17).

3. Ensemble (10) selon la revendication 1 ou la revendication 2, dans lequel l'absorbeur de chocs (17) est configuré pour se déformer par absorption d'énergie, lorsqu'un effort de compression suivant la direction longitudinale (X) est appliqué audit absorbeur de chocs (17).

4. Ensemble (10) selon l'une des revendications 1 à 3, comprenant en outre une traverse de tablier (21) située dans le compartiment moteur (102) et reliée au tablier (11), la traverse de tablier (21) s'étendant globalement transversalement par rapport à la direction longitudinale (X) et comprenant une âme (22) agencée sensiblement perpendiculairement à la direction longitudinale (X) et à distance du tablier (11), le tunnel (14) se prolongeant au-delà du tablier (11), dans le compartiment moteur (102), jusqu'à l'âme (22) de la traverse de tablier (21).

5. Ensemble (10) selon l'une des revendications 1 à 3, comprenant en outre une traverse de tablier (21) située dans le compartiment moteur (102) et reliée au tablier (11), la traverse de tablier (21) s'étendant globalement transversalement par rapport à la direction longitudinale (X) et comprenant une âme (22) agencée sensiblement perpendiculairement à la direction longitudinale (X) et à distance du tablier (11), le tunnel (14) se prolongeant dans le compartiment moteur (102) au-delà de l'âme (22) de la traverse de tablier (21).

6. Ensemble (10) selon l'une des revendications 1 à 5, dans lequel l'absorbeur de chocs (17) comprend une âme (40) plane, agencée globalement perpendiculairement à la direction longitudinale (X), à une extrémité avant du tunnel (14).

7. Ensemble (10) selon les revendications 4 et 6 prises ensemble, dans lequel l'âme (40) de l'absorbeur de chocs (17) est en appui contre l'âme (22) de la traverse de tablier (21).

8. Ensemble (10) selon la revendication 6 ou la revendication 7, dans lequel l'âme (40) de l'absorbeur de chocs (17) comprend des bords, dits verticaux, s'étendant sensiblement parallèlement à une direction verticale (Z), perpendiculaire à la direction longitudinale (X), dans lequel l'âme (40) comprend des ailes (43, 44) s'étendant parallèlement à la direction longitudinale (X) depuis les bords verticaux et venant prendre appui contre le tablier (11), et dans lequel les ailes (43, 44) sont pourvues d'une pluralité de plis (47, 48) repartis le long de leur aile (43, 44) respective suivant la direction longitudinale (X), chacun des plis (47, 48) étant agencé suivant un plan sensiblement perpendiculaire à la direction longitudinale (X).

9. Structure de caisse (100) de véhicule automobile comprenant un ensemble (10) selon l'une des revendications 1 à 8.

10. Véhicule automobile comprenant une structure de caisse (100) selon la revendication 9.

## Patentansprüche

1. Einheit (10) für eine Karosseriestruktur (100) eines Kraftfahrzeugs, die sich gemäß einer Längsrichtung (X) von hinten nach vorne erstreckt, wobei die Einheit (10) enthält:
- eine Querschutzwand (11), die sich zwischen einem unteren Querrand (12) und einem oberen Querrand (13) erstreckt, um einen Motorraum (102), der dazu bestimmt ist, eine Antriebseinheit (103) aufzunehmen, von einem Innenraum (101) zu trennen, der sich bezüglich des Motorraums (102) hinten befindet,
- einen Tunnel (14), der sich gemäß der Längsrichtung (X) erstreckt und einen im Innenraum (101) befindlichen ersten Abschnitt (15) enthält,
wobei die Einheit (10) **dadurch gekennzeichnet ist, dass** der erste Abschnitt (15) des Tunnels (14) sich durch einen zweiten Abschnitt (16), auf dem ein Aufprall-Absorber (17) angeordnet ist, der konzipiert ist, sich durch Energieabsorption zu verformen, über die Schutzwand (11) hinaus in den Motorraum (102) verlängert.

2. Einheit (10) nach Anspruch 1, wobei die Schutzwand (11) und der zweite Abschnitt (16) des Tunnels (14) zusammen einen freien Raum (39) definieren, in dem der Aufprall-Absorber (17) untergebracht ist.

3. Einheit (10) nach Anspruch 1 oder Anspruch 2, wobei der Aufprall-Absorber (17) konfiguriert ist, sich durch Energieabsorption zu verformen, wenn eine Druckkraft in Längsrichtung (X) auf den Aufprall-Absorber (17) angewendet wird.

4. Einheit (10) nach einem der Ansprüche 1 bis 3, die außerdem einen Schutzwand-Querträger (21) enthält, der sich im Motorraum (102) befindet und mit der Schutzwand (11) verbunden ist, wobei der Schutzwand-Querträger (21) sich insgesamt quer bezüglich der Längsrichtung (X) erstreckt und einen Mittelteil (22) enthält, der im Wesentlichen lotrecht zur Längsrichtung (X) und in Abstand zur Schutzwand (11) angeordnet ist, wobei der Tunnel (14) sich über die Schutzwand (11) hinaus bis zum Mittelteil (22) des Schutzwand-Querträgers (21) in den Motorraum (102) verlängert.

5. Einheit (10) nach einem der Ansprüche 1 bis 3, die außerdem einen Schutzwand-Querträger (21) enthält, der sich im Motorraum (102) befindet und mit der Schutzwand (11) verbunden ist, wobei der Schutzwand-Querträger (21) sich insgesamt quer bezüglich der Längsrichtung (X) erstreckt und einen Mittelteil (22) enthält, der im Wesentlichen lotrecht zur Längsrichtung (X) und in Abstand zur Schutzwand (11) angeordnet ist, wobei der Tunnel (14) sich über den Mittelteil (22) des Schutzwand-Querträgers (21) hinaus in den Motorraum (102) verlängert.

6. Einheit (10) nach einem der Ansprüche 1 bis 5, wobei der Aufprall-Absorber (17) einen ebenen Mittelteil (40) enthält, der insgesamt lotrecht zur Längsrichtung (X) an einem vorderen Ende des Tunnels (14) angeordnet ist.

7. Einheit (10) nach den Ansprüchen 4 und 6 zusammengenommen, wobei der Mittelteil (40) des Aufprall-Absorbers (17) gegen den Mittelteil (22) des Schutzwand-Querträgers (21) anliegt.

8. Einheit (10) nach Anspruch 6 oder Anspruch 7, wobei der Mittelteil (40) des Aufprall-Absorbers (17) so genannte senkrechte Ränder enthält, die sich im Wesentlichen parallel zu einer senkrechten Richtung (Z) lotrecht zur Längsrichtung (X) erstrecken, wobei der Mittelteil (40) Flügel (43, 44) enthält, die sich ausgehend von den senkrechten Rändern parallel zur Längsrichtung (X) erstrecken und gegen die Schutzwand (11) anliegen, und wobei die Flügel (43, 44) mit einer Vielzahl von Falten (47, 48) versehen sind, die entlang ihres jeweiligen Flügels (43, 44) gemäß der Längsrichtung (X) verteilt sind, wobei jede der Falten (47, 48) gemäß einer Ebene im Wesentlichen lotrecht zur Längsrichtung (X) angeordnet ist.

9. Karosseriestruktur (100) eines Kraftfahrzeugs, die eine Einheit (10) nach einem der Ansprüche 1 bis 8 enthält.

10. Kraftfahrzeug, das eine Karosseriestruktur (100) nach Anspruch 9 enthält.

## Claims

1. Assembly (10) for a motor vehicle body structure (100) extending from rear to front in a longitudinal direction (X), the assembly (10) comprising:
- a transverse firewall (11) extending between a lower transverse edge (12) and an upper transverse edge (13) to separate an engine compartment (102), intended to accommodate a powertrain (103), from a passenger compartment (101) located to the rear of the engine compartment (102),
- a tunnel (14) extending in the longitudinal direction (X) and comprising a first section (15) located in the passenger compartment (101),
the assembly (10) being **characterized in that** the first section (15) of the tunnel (14) extends beyond the firewall (11), in the engine compartment (102), in the form of a second section (16) on which is installed a shock absorber (17) designed to deform by absorption of energy.

2. Assembly (10) according to Claim 1, in which the firewall (11) and the second section (16) of the tunnel (14) together define a free space (39) which houses the shock absorber (17).

3. Assembly (10) according to Claim 1 or Claim 2, in which the shock absorber (17) is configured to deform by absorption of energy when a compressive force along the longitudinal direction (X) is applied to said shock absorber (17).

4. Assembly (10) according to one of Claims 1 to 3, further comprising a firewall crosspiece (21) located in the engine compartment (102) and connected to the firewall (11), the firewall crosspiece (21) extending generally transversely with respect to the longitudinal direction (X) and comprising a web (22) that is arranged essentially perpendicular to the longitudinal direction (X) and at a distance from the firewall (11), the tunnel (14) extending beyond the firewall (11), in the engine compartment (102), as far as the web (22) of the firewall crosspiece (21).

5. Assembly (10) according to one of Claims 1 to 3, further comprising a firewall crosspiece (21) located in the engine compartment (102) and connected to the firewall (11), the firewall crosspiece (21) extending generally transversely with respect to the longitudinal direction (X) and comprising a web (22) that is arranged essentially perpendicular to the longitudinal direction (X) and at a distance from the firewall (11), the tunnel (14) extending, in the engine compartment (102), beyond the web (22) of the firewall crosspiece (21).

6. Assembly (10) according to one of Claims 1 to 5, in which the shock absorber (17) comprises a planar web (40) that is arranged generally perpendicular to the longitudinal direction (X), at a front end of the tunnel (14).

7. Assembly (10) according to Claims 4 and 6 together, in which the web (40) of the shock absorber (17) presses against the web (22) of the firewall crosspiece (21).

8. Assembly (10) according to Claim 6 or Claim 7, in which the web (40) of the shock absorber (17) comprises edges, referred to as vertical edges, extending essentially parallel to a vertical direction (Z) which is perpendicular to the longitudinal direction (X), in which the web (40) comprises flanges (43, 44) extending parallel to the longitudinal direction (X) from the vertical edges and pressing against the firewall (11), and in which the flanges (43, 44) are provided with a plurality of folds (47, 48) distributed along their respective flange (43, 44) along the longitudinal direction (X), each of the folds (47, 48) being arranged in a plane essentially perpendicular to the longitudinal direction (X).

9. Motor vehicle body structure (100) comprising an assembly (10) according to one of Claims 1 to 8.

10. Motor vehicle comprising a body structure (100) according to Claim 9.
